# EUROPÄISCHE PATENTSCHRIFT

(11) **EP 3 976 963 B1**
(45) Veröffentlichungstag und Bekanntmachung des Hinweises auf die Patenterteilung: **27.09.2023**
(21) Anmeldenummer: 20728722.8
(22) Anmeldetag: 26.05.2020
(51) Int. Cl.: F04B 13/00, F04B 49/06

(54) **VERFAHREN UND VORRICHTUNG ZUR BESTIMMUNG EINER AMPLITUDE EINER PUMPENINDUZIERTEN FLUIDDRUCKSCHWANKUNG EINES FLUIDS**
METHOD AND DEVICE FOR DETERMINING AN AMPLITUDE OF A PUMP-INDUCED FLUID PRESSURE FLUCTUATION OF A FLUID
PROCÉDÉ ET DISPOSITIF POUR DÉTERMINER UNE AMPLITUDE D'UNE FLUCTUATION DE PRESSION D'UN FLUIDE INDUITE PAR POMPE

(30) Priorität: 01.06.2019 DE 102019003920
(43) Veröffentlichungstag der Anmeldung: 06.04.2022
(73) Patentinhaber: MAN Truck & Bus SE, 80995 München (DE)
(72) Erfinder: GRÜNBECK, Thomas, 80995 München (DE)
(74) Vertreter: v. Bezold & Partner Patentanwälte - PartG mbB
(86) Internationale Anmeldenummer: PCT/EP2020/064554
(87) Internationale Veröffentlichungsnummer: WO 2020/244965

(56) Entgegenhaltungen:
- EP-A2- 2 384 138
- DE-A1-102012 218 092
- DE-A1-102013 218 897
- DE-A1-102014 222 739
- DE-B3-102015 208 416

## Beschreibung

Die Erfindung betrifft ein Verfahren zur Bestimmung einer Amplitude einer pumpeninduzierten Fluiddruckschwankung eines Fluids, das mittels einer Pumpe auf einen Soll-Fluiddruck pₛₒₗₗ geregelt wird. Ferner betrifft die Erfindung eine Vorrichtung, die ausgelegt ist, ebendieses Verfahren durchzuführen sowie ein Kraftfahrzeug mit einer entsprechenden Vorrichtung.

Zur Verringerung von NOx-Emissionen von Brennkraftmaschinen, insbesondere von DieselBrennkraftmaschinen, werden heutzutage oftmals SCR-Katalysatoren zur Abgasnachbehandlung eingesetzt. Mittels derartiger Systeme werden die im Abgas enthaltenen Stickoxide mit Ammoniak als Reduktionsmittel zu Stickstoff reduziert, wozu dem Abgasstrom Ammoniak bzw. eine ammoniakabspaltende Substanz (z. B. wässrige Harnstofflösung) über geeignete Dosiervorrichtungen zugegeben wird.

In der Regel wird dabei das in einem Vorratstank gelagerte Reduktionsmittel über eine Pumpe zu einem oder mehreren Dosierventilen gefördert und zudem auf einen vorgegebenen Dosierdruck gebracht. Dieser kann dabei beispielsweise in Abhängigkeit einer Betriebsgröße der Brennkraftmaschine (z. B. die aktuelle Drehzahl) und/oder einer Kenngröße des Abgases (z. B. die aktuelle Abgastemperatur) festgelegt sein und (z. B. über eine Regelung der Pumpendrehzahl) auf einem möglichst konstanten Druckniveau gehalten werden.

Aufgrund dieser Regelung, und insbesondere aufgrund der - meist periodischen - Pumpenbewegungen unterliegt der Druck im Dosiersystem Variationen (z. B. in Form von Druckoszillationen), welche Rückschlüsse über Steifigkeit des hydraulischen Systems ermöglichen und damit zu Diagnosezwecken verwendet werden können. Entsprechend besteht in diesem Zusammenhang ein Bedarf an einer Methode, welche ein präzises Ermitteln bzw. Bestimmen der Größe derartiger pumpeninduzierter Druckschwankungen, d. h. insbesondere der Amplitude derartiger pumpeninduzierter Druckschwankungen, ermöglicht.

Die vorgenannte Amplitudenbestimmung wird im tatsächlichen Betrieb jedoch durch eine Reihe von Störeinflüssen, darunter z. B. Prelleffekte und/oder Schwankungen der Regelung, erschwert, sodass ein ermittelter Amplitudenwert oftmals nicht den tatsächlichen Zustand im System repräsentieren muss. Da sich die Amplitudenbestimmung entsprechend als nicht trivial gestalten kann, besteht in diesem Zusammenhang insbesondere ein Bedarf an einer Lösung zur Amplitudenbestimmung, mittels derer offensichtliche Unregelmäßigkeiten bzw. Unrichtigkeiten bei der Amplitudenbestimmung sogleich erkannt werden können. Ferner sollte eine derartige Lösung einfach und kostengünstig umzusetzen sein.

Aus der DE 10 2014 222 739 A1 ist in diesem Zusammenhang ein Verfahren zur Dosiermengen-Diagnose eines Reagenzmittel-Dosiersystems bekannt, bei welchem die Steifigkeit als Maß für die Dosiergenauigkeit des Reaktionsmittel-Dosiersystems ermittelt wird. Hierbei wird das Reagenzmittel-Dosiersystem mit einem Anregungs-Drucksignal beaufschlagt und das resultierende Reaktions-Drucksignal bewertet. Das Verfahren zeichnet sich dadurch aus, dass ein periodisches Anregungs-Drucksignal vorgesehen ist, dass das periodische Anregungs-Drucksignal eine konstante, fest vorgegebene Frequenz aufweist und dass die Amplitude des Reaktions-Drucksignals und/oder die Phasenverschiebung zwischen dem Anregungs-Drucksignal und dem Reaktion-Drucksignal zur Ermittlung der Steifigkeit erfasst werden.

Weiterhin offenbart die DE 10 2012 218 092 A1 ein Verfahren zur Funktionsüberwachung wenigstens eines Dosierventils eines Dosiersystems, insbesondere eines Dosiersystems für einen SCR- Katalysator, bei dem ein flüssiges Medium mittels einer Förderpumpe und wenigstens eines Dosierventils getaktet dosiert wird. Hierbei ist vorgesehen, dass der Druck im Dosiersystem bei der Ansteuerung des wenigstens einen Dosierventils erfasst wird, dass die erfassten Druckwerte mittels eines adaptiven Filters ausgewertet werden und dass aus einem Vergleich der mittels des adaptiven Filters ausgewerteten Druckwerte mit zu erwartenden Vergleichsdaten auf ein gegebenenfalls blockierendes oder teilblockierendes Dosierventil geschlossen wird und/oder die dosierte Menge an flüssigem Medium überwacht wird.

Diese Aufgaben werden durch ein Verfahren, eine Vorrichtung sowie ein Kraftfahrzeug mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Nach einem ersten unabhängigen Lösungsgedanken wird ein Verfahren bereitgestellt. Das Verfahren eignet sich dabei zur Bestimmung einer Amplitude A einer pumpeninduzierten, vorzugsweise periodischen, Fluiddruckschwankung eines Fluids, das mittels einer Pumpe, z. B. über eine Variation der Pumpendrehzahl, auf einen Soll-Fluiddruck pₛₒₗₗ geregelt wird. Als pumpeninduzierte Fluiddruckschwankung - auch als Fluiddruckvariation und/oder Fluiddruckfluktuation bezeichnet - kann in diesem Zusammenhang eine dynamische, vorzugsweise periodische, durch den Betrieb der Pumpe verursachte Veränderung des Fluiddrucks um eine Schwerpunktlage (z. B. pₛₒₗₗ) verstanden werden. So kann es sich bei der pumpeninduzierten Fluiddruckschwankung beispielsweise um eine sinusförmige Fluiddruckoszillation handeln. Die Amplitude A soll hierbei vorzugsweise ein Maß für die Größe dieser Schwankung sein.

Dazu umfasst das Verfahren den Schritt des Bereitstellens eines Drucksignals, umfassend mehrere Drucksignalwerte in einem vorbestimmten, d. h. zuvor festgelegten, Zeitintervall. Das Drucksignal kann dabei ein, vorzugsweise pumpenausgangsseitiger, Fluiddruck des Fluids sein und/oder eine Größe, aus der der vorgenannte, vorzugsweise pumpenausgangsseitige, Fluiddruck des Fluids ableitbar ist. Das Bereitstellen des Drucksignals kann ferner auch ein Erfassen, vorzugsweise ein quasi-simultanes Erfassen, des Drucksignals beinhalten. Zudem oder alternativ kann das Bereitstellen auch ein Empfangen des Drucksignals mittels einer entsprechenden Empfangseinrichtung und/oder ein Auslesen des Drucksignals aus einem Speicher umfassen. Das Drucksignal kann ferner sowohl ein analoges oder digitales Drucksignal sein.

Weiterhin umfasst das Verfahren den Schritt des Ermittelns der Amplitude Ader pumpeninduzierten Fluiddruckschwankung auf Basis des bereitgestellten Drucksignals. Dies kann dabei beispielsweise auf Basis einer Differenz zwischen einem maximalen Drucksignalwerts Dₘₐₓ und einem minimalen Drucksignalwert Dₘᵢₙ des bereitgestellten Drucksignals erfolgen. Zudem oder alternativ kann das Ermitteln der Amplitude A auch auf Basis einer Abweichung bzw.

Differenz zu einem lokalen oder globalen arithmetische Mittelwerts bzw. zu einer Schwerpunktlage des bereitgestellten Drucksignals erfolgen. Das Ermitteln der Amplitude A kann in diesem Zusammenhang auch als ein Ermitteln eines Amplitudenschätzwerts und/oder als ein Ermitteln einer vorläufigen Amplitude bezeichnet werden, da - wie im Folgenden beschrieben - vor einem letztlichen Ausgeben des ermittelten Amplituden(schätz)werts ferner noch eine Plausibilitätskontrolle erfolgen soll.

Hierzu umfasst das Verfahren den Schritt des Überprüfens, ob das bereitgestellte Drucksignal einem vorbestimmten Plausibilitätskriterium genügt. Entsprechend kann das Überprüfen auch als ein Validieren und/oder ein Plausibilisieren bezeichnet werden. Vorzugsweise charakterisiert das Plausibilitätskriterium dabei einen quasi-stationären Zustand (z. B. einen Zustand, in dem das Drucksignal um ein quasi-stationäres Niveau schwankt). Dazu kann das vorbestimmte, d. h. zuvor festgelegte, Plausibilitätskriterium beispielsweise ein Über- und/oder Unterschreiten eines vorgegebenen Drucksignalschwellenwerts und/oder ein Einhalten eines bestimmten Drucksignalwertebereichs umfassen. Mit anderen Worten kann das vorbestimmte Plausibilitätskriterium auch als eine Bedingung verstanden werden, die erfüllt sein muss, damit sich das Drucksignal prinzipiell zur Amplitudenermittlung eignet und/oder die erfüllt sein muss, damit die ermittelte Amplitude A tatsächlich als ein repräsentativer Wert für die Systemsteifigkeit herangezogen werden kann. Beispielsweise kann das vorbestimmte Plausibilitätskriterium auch die Bedingung umfassen, ob das Drucksignal S gerade nicht während eines - den Druckverlauf stark verfälschenden - Dosiervorgangs erfasst wurde. Anders ausgedrückt kann das Nicht-Erfüllen des Plausibilitätskriteriums ein Erkennen offensichtliche Unrichtigkeiten bei der Amplitudenermittlung ermöglichen.

Falls das bereitgestellte Drucksignal dem vorbestimmten Plausibilitätskriterium genügt, soll schließlich ein Ausgeben der ermittelten Amplitude A erfolgen. Dabei kann das Ausgeben, welches auch als Bereitstellen bezeichnet werden kann, ein optisches Anzeigen, ein Erzeugen eines (z. B. elektronischen) Amplitudensignals und/oder Hinterlegen der ermittelten Amplitude A in einem Speicher umfassen. Falls hingegen das bereitgestellte Drucksignal dem vorbestimmten Plausibilitätskriterium nicht genügt, soll ein Verwerfen, d. h. kein Ausgeben, der ermittelten Amplitude A erfolgen.

Insgesamt kann das vorgenannte Verfahren somit als zweistufiges bzw. kombiniertes Verfahren verstanden werden, bei dem grundsätzlich neben der Ermittlung der Amplitude A einer pumpeninduzierten Fluiddruckschwankung, sogleich auch eine Plausibilisierung erfolgt, ob diese auch tatsächlich einen repräsentativen Wert für den aktuellen Systemzustand darstellt.

Dadurch wird auf vorteilhafte Weise insgesamt die Zuverlässigkeit bei der Amplitudenbestimmung erhöht. Weiterhin kann die vorgenannte Amplitudenbestimmung auf vorteilhafte Weise die Grundlage für eine weitere Diagnose des Fluidsystems bilden, da die Amplitude A eine Auskunft über die Steifigkeit des Systems und damit eine Auskunft über das Vorhandensein möglicher Leckagen etc. geben kann.

Nach einem ersten Aspekt der Erfindung kann das vorgenannte Fluid ein Reduktionsmittel zur Abgasnachbehandlung sein. Beispielsweise kann es sich bei dem Fluid um Ammoniak und/oder wässrige Harnstofflösung handeln. Im Allgemeinen eignet sich das erfindungsgemäße Verfahren jedoch für jegliche Fluide, d. h. Gase, Flüssigkeiten, Gas-Flüssigkeits-Gemische und/oder Flüssigkeiten mit geringem Feststoffanteil. Entsprechend kann das Verfahren somit beispielsweise auch im Zusammenhang mit einer Öl-, Kraftstoff- oder Kühlwasserpumpe Anwendung finden.

Zudem oder alternativ kann die pumpeninduzierte Fluiddruckschwankung auch eine durch den Betrieb der Pumpe verursachte periodische und/oder sinusförmige Fluiddruckoszillation sein. Diese kann beispielsweise durch eine regelmäßige Drehbewegung eines Rotors (z. B im Fall von Drehschieberpumpen) oder einer oszillierenden Bewegung eines Kolbens (z. B. im Fall von Membranpumpen) verursacht werden.

Zudem oder alternativ kann das Verfahren - z. B. als weiteren Schritt - auch ein Bestimmen einer Systemsteifigkeit auf Basis der ermittelten und/oder ausgegebenen Amplitude A umfassen. Diese kann dabei ebenfalls ausgegeben werden. Die Systemsteifigkeit, welche auch als hydraulische und/oder mechanische Systemsteifigkeit bezeichnet werden kann, kann anschließend z. B. auch für Diagnosezwecke herangezogen werden, wobei deren Berechnung mittels dem Fachmann geläufiger Verfahren bzw. Modelle erfolgen kann. Auf vorteilhafte Weise wird dadurch ein zuverlässiges Überwachen des Fluidsystems, z. B. in Hinblick auf eventuelle Leckagen etc., ermöglicht.

Gemäß einem weiteren Aspekt der Erfindung kann der Schritt des Ermittelns der Amplitude A ein Bestimmen eines maximalen und minimalen Drucksignalwerts Dₘₐₓ und Dₘᵢₙ des bereitgestellten Drucksignals innerhalb eines ersten, vorzugsweise zuvor festgelegten, Zeitabschnitts t₁ des vorbestimmten Zeitintervalls umfassen. Mit anderen Worten soll innerhalb des ersten Zeitabschnitts t₁ des Drucksignals der größte und kleineste Drucksignalwert bestimmt werden. Vorzugsweise ist der erste Zeitabschnitt t₁ hierbei eine echte Teilmenge des vorbestimmten Zeitintervalls des Drucksignals, z. B. dessen erste Hälfte. Ferner kann dann ein Berechnen der Amplitude A auf Basis des bestimmten maximalen und minimalen Drucksignalwerts Dₘₐₓ und Dₘᵢₙ erfolgen. Beispielsweise kann die Amplitude A, welche auch als Schwankungsbreite bezeichnet werden kann, als A=|Dₘₐₓ₋Dₘᵢₙₗ|/2 festgelegt werden. Alternativ können jedoch auch andere Rechenvorschriften, wie z. B. das geometrische Mittel von Dₘₐₓ und Dₘᵢₙ, verwendet werden, wobei zusätzlich auch dem Fachmann geläufige Umrechnungs-, Gewichtungs- und/oder Korrekturfaktoren zur Anwendung kommen können.

Weiterhin kann das Überprüfen auch ein Ermitteln einer ersten Anzahl N₁ von Drucksignalwerten umfassen, die innerhalb eines - vorzugsweise zum ersten Zeitabschnitt t₁ nachfolgenden - zweiten Zeitabschnitts t₂ in einem vorbestimmten ersten Druckband Δ₁ um den maximalen Drucksignalwert Dₘₐₓ liegen. Als "Druckband" - auch als Toleranzbereich bezeichnet - kann in diesem Zusammenhang ein definierter Druckbereich um den maximalen Drucksignalwert Dₘₐₓ verstanden werden, der durch eine gewisse Breite und/oder einem oberen und einem unteren Druckbandgrenzwert definiert sein kann. Ferner kann es sich bei dem zweiten Zeitabschnitts t₂ beispielsweise um die zweite Hälfte des vorbestimmten Zeitintervalls des Drucksignals handeln. So kann z. B. zunächst in einem ersten Zeitabschnitts t₁ von z. B. 0.5 s Dₘₐₓ und Dₘᵢₙ bestimmt wurden und dann in den daran anschließenden nächsten 0.5 s (= Zeitabschnitt t₂) N₁ ermittelt werden. Bevorzugt soll dabei das Ausgeben der Amplitude A nur dann erfolgen, falls die ermittelte erste Anzahl N₁ einen ersten, vorzugsweise vorbestimmten, Schwellenwert S₁ (z. B. S₁=3) überschreitet. Mit anderen Worten soll das bereitgestellte Drucksignal dem vorbestimmten Plausibilitätskriterium genügen, falls die erste Anzahl N₁ einen ersten Schwellenwert S₁ überschreitet. Vorzugsweise soll das Plausibilitätskriterium andernfalls nicht erfüllt sein.

Zudem oder alternativ kann das Überprüfen auch ein Ermitteln einer zweiten Anzahl N₂ von Drucksignalwerten umfassen, die innerhalb des zweiten Zeitabschnitts t₂ in einem vorbestimmten zweiten Druckband Δ₂ um den minimalen Drucksignalwert Dₘᵢₙ liegen. Auch hier soll der Ausdruck "Druckband" wiederum einen definierten Druckbereich um den minimalen Drucksignalwert Dₘᵢₙ bezeichnen, der durch eine gewisse Breite und/oder einem oberen und einem unteren Druckbandgrenzwert definiert sein kann. Bevorzugt soll dabei das Ausgeben der Amplitude A nur dann erfolgen, falls die ermittelte zweite Anzahl N₂ einen zweiten, vorzugsweise ebenfalls vorbestimmten, Schwellenwert S₂ (z. B. S₂=3) überschreitet. D. h. das bereitgestellte Drucksignal soll dem vorbestimmten Plausibilitätskriterium genügen, falls die zweite Anzahl N₂ einen zweiten Schwellenwert S₂ überschreitet. Vorzugsweise soll auch hier andernfalls das Plausibilitätskriterium nicht erfüllt sein. Dabei können die vorstehend erwähnten, vorzugsweise zuvor festgelegten, Zeitabschnitte t₁ und t₂ des Drucksignals dabei sowohl gleich lang sein oder aber auch eine unterschiedliche Länge besitzen. So kann z. B. der erste Zeitabschnitt t₁ kürzer als der zweite Zeitabschnitts t₂ sein. Ferner kann sich der zweite Zeitabschnitt t₂ unmittelbar an den ersten Zeitabschnitts t₁ anschließen, oder mit einem zeitlichen Abstand vom ersten Zeitabschnitt t₁ beginnen. Auf vorteilhafte Weise wird dadurch eine einfach zu realisierende Möglichkeit zur Plausibilisierung, ob ein quasi-stationärer Zustand vorliegt, bereitgestellt, wodurch die insgesamt die Zuverlässigkeit der Bestimmung eines repräsentativen Amplitudenwerts erhöht wird.

Um auf vorteilhafte Weise diese Zuverlässigkeit noch weiter zu erhöhen, kann das Überprüfen auch ein Ermitteln umfassen, ob innerhalb des zweiten Zeitabschnitts t₂ zumindest ein Drucksignalwert über dem vorbestimmten ersten Druckband Δ₁ um den maximalen Drucksignalwert Dₘₐₓ liegt. D. h. mit anderen Worten kann überprüft werden, ob innerhalb des zweiten Zeitabschnitts t₂ ein Drucksignalwert mit einen Wert größer als ein oberer Druckbandgrenzwert des vorbestimmten ersten Druckbands Δ₁ vorliegt. Falls ja, soll bevorzugt das Ausgeben der Amplitude A der pumpeninduzierten Fluiddruckschwankung nicht erfolgen. Mit anderen Worten soll das bereitgestellte Drucksignal dem vorbestimmten Plausibilitätskriterium genügen, falls kein Drucksignalwert über dem vorbestimmten ersten Druckband Δ₁ um den maximalen Drucksignalwert Dₘₐₓ liegt.

Zudem oder alternativ kann das Überprüfen dabei auch ein Ermitteln umfassen, ob innerhalb des zweiten Zeitabschnitts t₂ zumindest ein Drucksignalwert unter dem vorbestimmten zweiten Druckband Δ₂ um den minimalen Drucksignalwert Dₘᵢₙ liegt. Mit andern Worten kann überprüft werden, ob innerhalb des zweiten Zeitabschnitts t₂ ein Drucksignalwert mit einem Wert kleiner als ein unterer Druckbandgrenzwert des vorbestimmten zweiten Druckbands Δ₂ vorliegt. Falls ja, soll vorzugsweise auch in diesem Fall das Ausgeben der Amplitude Ader pumpeninduzierten Fluiddruckschwankung nicht erfolgen. D. h. das bereitgestellte Drucksignal soll dem vorbestimmten Plausibilitätskriterium genügen, falls kein Drucksignalwert unter dem vorbestimmten zweiten Druckband Δ₂ um den minimalen Drucksignalwert Dₘᵢₙ liegt.

Weiterhin kann nach einem weiteren Aspekt der Erfindung das vorbestimmte erste Druckband Δ₁, welches auch als erster Toleranzbereich bezeichnet werden kann, um den maximalen Drucksignalwert Dₘₐₓ zentriert sein. Mit anderen Worten kann sich das vorbestimmte erste Druckband Δ₁ ausgehend von Dₘₐₓ gleich weit zu höheren wie zu niedrigeren Drucksignalwerten erstrecken. Zudem oder alternativ kann auch das vorbestimmte zweite Druckband Δ₂, welches auch als zweiter Toleranzbereich bezeichnet werden kann, um den minimalen Drucksignalwert Dₘᵢₙ zentriert sein. D. h., anders ausgedrückt kann sich auch das vorbestimmte zweite Druckband Δ₂ ausgehend von Dₘᵢₙ gleich weit zu höheren wie zu niedrigeren Drucksignalwerten erstrecken. Auf vorteilhafte Weise wird dadurch eine einfache Möglichkeit zur Festlegung der Drucksignalgrenzen im Zuge der Plausibilisierung der zuvor ermittelten maximalen und minimalen Drucksignalwerts Dₘₐₓ und Dₘᵢₙ geschaffen. Falls zweckdienlich, kann jedoch das vorbestimmte erste Druckband Δ₁ und/oder das vorbestimmte zweite Druckband Δ₂ auch azentrisch um den maximalen bzw. den minimalen Drucksignalwert Dₘₐₓ bzw. Dₘᵢₙ angeordnet sein.

Zudem oder alternativ kann das vorbestimmte erste Druckband Δ₁ und/oder das vorbestimmte zweite Druckband Δ₂ eine Breite aufweisen, die auf Basis des ermittelten maximalen und/oder minimalen Drucksignalwerts Dₘₐₓ und/oder Dₘᵢₙ festgelegt ist. Beispielsweise kann das vorbestimmte erste Druckband Δ₁ eine Breite - welche auch als erste Breite bezeichnet werden kann - aufweisen, die im Wesentlichen als 0.2% des maximalen oder minimalen Drucksignalwerts Dₘₐₓ oder Dₘᵢₙ festgelegt ist. Ferner kann auch das vorbestimmte zweite Druckband Δ₂ eine Breite - welche auch als zweite Breite bezeichnet werden kann - aufweisen, die im Wesentlichen als 0.2% des maximalen oder minimalen Drucksignalwerts Dₘₐₓ oder Dₘᵢₙ festgelegt ist. Hierbei kann als "Breite" allgemein ein Bereich zwischen einem jeweiligen oberen und einem unteren Druckbandgrenzwert des vorbestimmten ersten bzw. zweiten Druckbands Δ₁ bzw. Δ₂ verstanden werden. Durch die Festlegung der Breiten der vorbestimmten Druckbänder Δ₁ und Δ₂ in Abhängigkeit von Dₘₐₓ bzw. Dₘᵢₙ wird auf vorteilhafte Weise eine flexible Anpassung der vorbestimmten Druckbänder Δ₁ und Δ₂ an das jeweilige Niveau der Drucksignalwerte erreicht.

Zudem oder alternativ kann das vorbestimmte erste Druckband Δ₁ auch dieselbe Breite wie das vorbestimmte zweite Druckband Δ₂ aufweisen. Mit anderen Worten kann die erste Breite gleich der zweiten Breite sein. Beispielsweise kann sowohl das erste vorbestimmte Druckband Δ₁ als auch das vorbestimmte zweite Druckband Δ₂ eine Breite von 20 hPa aufweisen. Alternativ kann das vorbestimmte erste Druckband Δ₁ jedoch auch eine unterschiedliche Breite wie das vorbestimmte zweite Druckband Δ₂ aufweisen ohne das der Bereich der Erfindung verlassen wird.

Nach einem weiteren Aspekt der Erfindung kann der erste Zeitabschnitt t₁ kürzer als der zweite Zeitabschnitt t₂ sein. Beispielsweise kann t₁ = 0.3 s und t₂ = 0.5 s sein. Zudem oder alternativ kann der erste Zeitabschnitt t₁ und/oder der zweite Zeitabschnitt t₂ auch länger als 0.1 s, vorzugsweise länger als 0.3 s, besonders bevorzugt länger als 0.5 s sein. Vorzugsweise liegen dabei jedoch sowohl der erste Zeitabschnitt t₁ als auch der zweite Zeitabschnitt t₂ innerhalb des vorbestimmten Zeitintervalls des Drucksignals. Erfinderseitig wurde hierzu festgestellt, dass durch diese Festlegung auf vorteilhafte Weise ein guter Kompromiss zwischen der Berücksichtigung einer Vielzahl an Drucksignalwerten und einer möglichst häufigen Aktualisierung der ermittelten Amplitude A erreicht werden kann.

Ferner kann gemäß einem weiteren Aspekt der Erfindung das Ermitteln der Amplitude A ein Berechnen der Amplitude A auf Basis einer, vorzugsweise gleitenden, mittleren absoluten Abweichung einer Mehrzahl von Drucksignalwerten des bereitgestellten Drucksignals zu einem gleitenden Drucksignalmittelwert umfassen. Vorzugsweise handelt es sich bei der Mehrzahl von Drucksignalwerten dabei um aufeinanderfolgende Drucksignalwerte. Mit anderen Worten kann für eine Mehrzahl von Drucksignalwerten jeweils die betragsmäßige Abweichung zum gleitenden Drucksignalmittelwert berechnet werden und anschließend das arithmetische Mittel dieser betragsmäßigen Abweichungen gebildet werden. Dabei kann als gleitender bzw. wandernder Drucksignalmittelwert der Durchschnitt aus mehreren einem "jeweiligen Drucksignalwert" vorausgehender, d. h. zeitlich zurückliegender, Drucksignalwerte verstanden werden, wobei sich der gleitende Drucksignalmittelwert mit dem jeweils betrachteten "jeweiligen Drucksignalwert" mitverschiebt bzw. mit diesem mitwandert. Anders ausgedrückt basiert der gleitende Drucksignalmittelwert immer auf einer gleich langen Zeitreihe bzw. auf einer festen Anzahl von Drucksignalwerten vor einem "jeweiligen Drucksignalwert". Beispielsweise kann der gleitende Drucksignalmittelwert auf Basis des arithmetischen Mittels der letzten 10 einem Drucksignalwert vorausgehender Drucksignalwerte ermittelt werden. Dabei kann das Berechnen der Amplitude A auch ein Anwenden von dem Fachmann geläufigen Umrechnungs-, Gewichtungs- und/oder Korrekturfaktoren, vorzugsweise eine Multiplikation mit dem Faktor π/2, umfassen. Auf vorteilhafte Weise wird damit ebenfalls eine zuverlässige sowie einfach zu realisierende Möglichkeit zur Ermittlung der Amplitude A bereitgestellt.

Um hierbei auf vorteilhafte Weise wiederum eine Plausibilisierung zu ermöglichen, kann das Überprüfen ferner ein Ermitteln einer Summe von vorzeichenbehafteten Abweichungen der Mehrzahl von, vorzugsweise aufeinanderfolgenden, Drucksignalwerten des Drucksignals zum gleitenden Drucksignalmittelwert umfassen. Mit anderen Worten kann der vorzeichenbehaftete (d. h. positive bzw. negative) Abstand eines jeden Drucksignalwerts der Mehrzahl von Drucksignalwerten zu dem zum jeweiligen Drucksignalwert zugehörigen Wert des gleitenden Drucksignalmittelwerts ermittelt werden und diese vorzeichenbehafteten Abstände aufsummiert werden. Im Falle zeitlich dicht liegender Drucksignalwerte bzw. eines nahezu kontinuierlichen Drucksignals kann die Summation - wie für den Fachmann sofort ersichtlich - auch als Integration verstanden werden. Alternativ zur Ermittlung der Summe von vorzeichenbehafteten Abweichungen kann auch die mittlere Abweichung der Mehrzahl von, vorzugsweise aufeinanderfolgenden, Drucksignalwerten des Drucksignals zum gleitenden Drucksignalmittelwert berechnet werden. Hierbei soll das Ausgeben der Amplitude A bevorzugt nur dann erfolgen, falls die Summe (bzw. Integral) von vorzeichenbehafteten Abweichungen bzw. die mittlere Abweichung gleich 0 oder kleiner als ein vorbestimmter Schwellenwert (z. B. 5 hPa) ist. D. h. das bereitgestellte Drucksignal soll dem vorbestimmten Plausibilitätskriterium genügen, falls die Summe von vorzeichenbehafteten Abweichungen oder alternativ die mittlere Abweichung gleich 0 oder kleiner als ein vorbestimmter Schwellenwert ist. Dieser Überprüfungsschritt stellt dabei auf vorteilhafte Weise sicher, dass der ausgegebene Amplitudenwert der pumpeninduzierten Fluiddruckschwankung die Abweichung zu einen quasi-stationären Mittelwert angibt bzw. das ein quasi-stationärer Zustand vorliegt.

Gemäß einem weiteren Aspekt der Erfindung kann das Berechnen der Amplitude A der pumpeninduzierten Fluiddruckschwankung ferner ein Berechnen eines zugehörigen Werts des gleitenden Drucksignalmittelwerts zu jedem Drucksignalwert der Mehrzahl von Drucksignalwerten umfassen. Mit andern Worten kann zu jedem Drucksignalwert der Mehrzahl von Drucksignalwerten zunächst ein gesonderter Wert des gleitenden Drucksignalmittelwerts ermittelt werden. Dieser zugehörige bzw. gesonderte Wert kann dabei auf Basis mehrerer dem jeweiligen Drucksignalwert, vorzugsweise unmittelbar, vorausgehender Drucksignalwerte berechnet werden. Beispielhaft kann das Berechnen der jeweiligen zugehörigen Werte des gleitenden Drucksignalmittelwerts auf Basis des arithmetischen Mittels der letzten 8 dem jeweiligen Drucksignalwert unmittelbar vorausgehender Drucksignalwerte erfolgen. Im Anschluss dazu kann das Berechnen der Amplitude A der pumpeninduzierten Fluiddruckschwankung ferner auch ein Berechnen einer betragsmäßigen Abweichung eines jeden Drucksignalwerts der Mehrzahl von Drucksignalwerten zum zugehörigen Wert des gleitenden Drucksignalmittelwerts umfassen. Mit anderen Worten kann der absolute Betrag des Abstands eines jeden Drucksignalwerts der Mehrzahl von Drucksignalwerten zu dem zum jeweiligen Drucksignalwert zugehörigen Wert des gleitenden Drucksignalmittelwerts ermittelt werden. Weiterhin kann das Ermitteln der Amplitude A der pumpeninduzierten Fluiddruckschwankung ein Berechnen des arithmetischen Mittels der vorgenannten berechneten betragsmäßigen Abweichungen umfassen.

Um auf vorteilhafte Weise ein Rauschen bzw. "Ausreißer" im bereitgestellten Drucksignal zu kompensieren, kann nach einem weiteren Aspekt der Erfindung die vorgenannte Mehrzahl von Drucksignalwerten zumindest 10, vorzugsweise 50, besonders bevorzugt 100, aufeinanderfolgende Drucksignalwerte umfassen. Hierbei versteht sich, dass im Zusammenhang mit diesem Merkmal das bereitgestellte Drucksignal auch tatsächlich eine entsprechende Anzahl an Drucksignalwerten im vorbestimmten Zeitintervall umfassen soll. Zudem oder alternativ kann der gleitende Drucksignalmittelwert auch auf einer zuvor festgelegten Anzahl von Drucksignalwerten basieren. Beispielsweise kann der gleitende Drucksignalmittelwert auf den letzten 8 Drucksignalwerten basieren. Zudem oder alternativ kann der gleitende Drucksignalmittelwert auch auf Drucksignalwerten in einem zuvor festgelegten Zeitintervall basieren. Mit andern Worten kann der jeweilige Wert des gleitenden Drucksignalmittelwerts auf Basis aller Drucksignalwerte in einem vorbestimmten Zeitraum, z. B. den letzten 0.2 s, berechnet werden. In beiden Fällen beziehen sich dabei die Angaben auf den Drucksignalwert, für den der jeweilige Wert des gleitenden Drucksignalmittelwerts ermittelt wird.

Um ferner auch über einen längeren Zeitraum eine effiziente Amplitudenbestimmung zu ermöglichen kann gemäß einem weiteren Aspekt der Erfindung das Verfahren einen getakteten Betrieb umfassen, in dem das Verfahren in regelmäßigen Zeitabständen ausgeführt wird. Vorzugsweise entsprechen die regelmäßigen Zeitabstände dabei jeweils dem vorbestimmten Zeitintervall, wobei das vorbestimmte Zeitintervall und/oder die regelmäßigen Zeitabstände lediglich beispielhaft 1 Sekunde betragen können. Mit anderen Worten kann beim getakteten Betrieb ein regelmäßiges Ausgeben der ermittelten Amplitude A der pumpeninduzierten Fluiddruckschwankung nach Ablauf der regelmäßigen Zeitabstände erfolgen.

Gemäß einem weiteren Aspekt der Erfindung kann das auf einen Soll-Fluiddruck pₛₒₗₗ geregelte Fluid mittels einer Dosiereinrichtung dosierbar sein. Mit anderen Worten kann das auf einen Soll-Fluiddruck pₛₒₗₗ geregelte Fluid mit einer Dosiereinrichtung, z. B. in Form eines Dosierventils, in Fluidverbindung stehen. Weiterhin kann das bereitgestellte Drucksignal ein Drucksignal während einer Betriebsphase der Dosiereinrichtung sein, in der keine Dosierung erfolgt. Auf vorteilhafte Weise können dadurch Einflüsse des Dosiersystems auf das Drucksignal (z. B. Druckeinbrüche beim Öffnen und/oder Prelleffekte beim Schließen des Dosierventils) vermieden werden, die eine Amplitudenermittlung verfälschen könnten. In diesem Zusammenhang kann das bereitgestellte Drucksignal im Schritt des Überwachens dem vorbestimmten Plausibilitätskriterium genügen, falls das Drucksignal während einer Betriebsphase der Dosiereinrichtung erfasst wurde, in der keine Dosierung erfolgt.

Um weiterhin eine möglichst zuverlässige und störungsfreie Amplitudenermittlung zu ermöglichen, kann nach einem weiteren Aspekt der Erfindung das bereitgestellte Drucksignal ein Drucksignal während einer Leerlaufphase und/oder Teillastphase der Pumpe sein. Die Leerlaufphase soll dabei im Wesentlichen eine Nulllastphase der Pumpe bezeichnen, z. B. eine Betriebsphase, in der gerade keine Dosierung erfolgt. Zudem oder alternativ kann das bereitgestellte Drucksignal auch ein Drucksignal während einer Betriebsphase der Pumpe sein, in der eine Pumpengeschwindigkeit zwischen 10-30%, vorzugsweise zwischen 15-25%, besonders bevorzugt zwischen 18-22%, der maximalen Pumpengeschwindigkeit vorliegt. Bei der maximalen Pumpengeschwindigkeit soll es sich dabei um eine maximal mögliche und/oder maximal zulässige Pumpengeschwindigkeit handeln. Zudem oder alternativ kann das bereitgestellte Drucksignal ferner auch ein Drucksignal während einer Betriebsphase der Pumpe sein, in der der Fluiddruck nicht mehr als 5%, vorzugsweise nicht mehr 2%, besonders bevorzugt nicht mehr als 1%, vom Soll-Fluiddruck pₛₒₗₗ abweicht. Vorzugsweise handelt es sich bei dem bereitgestellten Drucksignal somit um ein Drucksignal, das im vorbestimmten Zeitintervall möglichst unter unveränderten Systembedingungen (Pumpengeschwindigkeit, Fluidmenge etc.) erfasst wurde. Die vorgenannten Bedingungen können dabei wiederum jeweils für sich oder in Kombination als vorbestimmtes Plausibilitätskriterium verwendet werden. So kann beispielsweise das bereitgestellte Drucksignal dem vorbestimmten Plausibilitätskriterium genügen, falls das Drucksignal ein Drucksignal während einer Leerlaufphase und/oder einer Teillastphase der Pumpe ist.

Weiterhin wird erfindungsgemäß eine Vorrichtung zur Bestimmung einer Amplitude A einer pumpeninduzierten Fluiddruckschwankung eines Fluids bereitgestellt, wobei das Fluid vorzugsweise mittels einer Pumpe auf einen Soll-Fluiddruck pₛₒₗₗ geregelt wird. Die Vorrichtung ist dabei ausgelegt, ein Verfahren, wie in diesem Dokument beschrieben, durchzuführen. Hierzu kann die Vorrichtung einen Prozessor sowie einen Speicher umfassen. Vorzugsweise enthält der Speicher hierzu Anweisungen, die durch den Prozessor ausführbar sind, wodurch die Vorrichtung insgesamt in der Lage ist, ein zuvor beschriebenes Verfahren durchzuführen. Beispielsweise kann es sich bei der Vorrichtung zur Bestimmung einer Amplitude A einer pumpeninduzierten Fluiddruckschwankung eines Fluids um ein Steuergerät eines Kraftfahrzeugs handeln. Alternativ kann es sich bei der Vorrichtung zur Bestimmung einer Amplitude A einer pumpeninduzierten Fluiddruckschwankung eines Fluids jedoch auch um eine fahrzeugexterne Recheneinrichtung handeln.

Um auf vorteilhafte Weise das zur Amplitudenbestimmung benötigte Drucksignal sogleich auch zu detektieren, kann die Vorrichtung hierbei ferner auch eine Sensoreinrichtung umfassen, die ausgebildet ist, das Drucksignal zu erfassen und bereitzustellen. Vorzugsweise kann die Sensoreinrichtung hierbei ausgebildet sein, einen auf einen Soll-Fluiddruck pₛₒₗₗ geregelten Fluiddruck eines Fluids (z. B. eines Reduktionsmittels zur Abgasnachbehandlung) zu erfassen und bereitzustellen. Beispielsweise kann die Sensoreinrichtung in diesem Zusammenhang ein piezoresistiver, piezoelektrischer, kapazitiver und/oder induktiver Drucksensor sein.

Ferner wird erfindungsgemäß auch ein Kraftfahrzeug bereitgestellt. Dieses umfasst hierbei eine Vorrichtung zur Bestimmung einer Amplitude A einer pumpeninduzierten Fluiddruckschwankung eines Fluids, wie in diesem Dokument beschrieben. Ferner kann das Kraftfahrzeug eine Pumpe (z. B. eine Zahnradpumpe) umfassen, mittels der vorzugsweise ein Fluiddruck des Fluids auf einen Soll-Fluiddruck pₛₒₗₗ geregelt werden kann. Bevorzugt handelt es sich bei dem Fluid dabei um ein Reduktionsmittel zur Abgasnachbehandlung, wobei auch andere Fluide, darunter z. B. Öl, Kraftstoff und/oder Kühlwasser, verwendet werden können, ohne den Bereich der Erfindung zu verlassen.

Die zuvor beschriebenen Aspekte und Merkmale der Erfindung sind dabei beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1:: Eine schematische Darstellung eines Systems zur Abgasnachbehandlung eines Kraftfahrzeugs, umfassend eine Vorrichtung zur Bestimmung einer Amplitude A einer pumpeninduzierten Fluiddruckschwankung eines Fluids gemäß einer Ausführungsform der Erfindung;
- Figur 2:: Exemplarische Messwerte eines Drucksignals eines Fluids als Funktion der Zeit, das zur erfindungsgemäßen Bestimmung einer Amplitude A einer pumpeninduzierten Fluiddruckschwankung eines Fluids genutzt werden kann;
- Figur 3:: Eine schematische Darstellung, welche die Verfahrensschritte des Ermittelns und Überprüfens gemäß einer ersten Ausführungsform der Erfindung veranschaulicht;
- Figur 4:: Ein Flussdiagramm zur Illustration des Verfahrens zur Bestimmung einer Amplitude A einer pumpeninduzierten Fluiddruckschwankung eines Fluids gemäß einer Ausführungsform der Erfindung;
- Figur 5:: Eine schematische Darstellung, welche die Verfahrensschritte des Ermittelns und Überprüfens gemäß einer zweiten Ausführungsform der Erfindung veranschaulicht; und
- Figur 6:: Eine schematische Darstellung eines Kraftfahrzeugs mit einer Vorrichtung zur Bestimmung einer Amplitude A einer pumpeninduzierten Fluiddruckschwankung eines Fluids gemäß einer Ausführungsform der Erfindung.

Gleiche oder funktional äquivalente Elemente sind dabei in allen Figuren mit denselben Bezugszeichen bezeichnet und zum Teil nicht gesondert beschrieben.

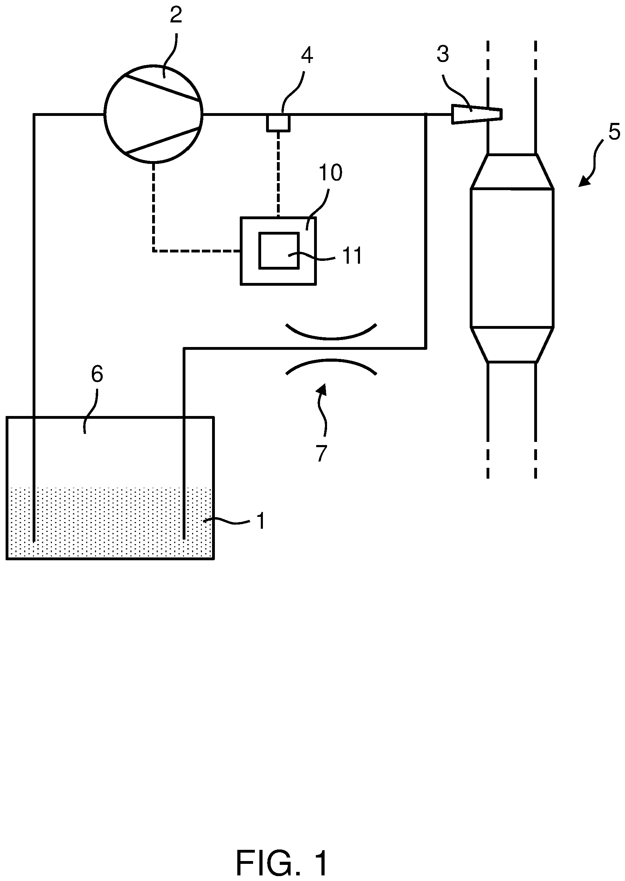

Figur 1 zeigt eine schematische Darstellung eines Systems zur Abgasnachbehandlung eines Kraftfahrzeugs 20, umfassend eine Vorrichtung 10 zur Bestimmung einer Amplitude A einer pumpeninduzierten Fluiddruckschwankung S_{Var} eines Fluids 1 (hier beispielhaft ein Reduktionsmittel) gemäß einer Ausführungsform der Erfindung. Grundsätzlich weist das System zur Abgasnachbehandlung dabei einen Tank 6 zur Lagerung und/oder Bereitstellung eines, vorzugsweise flüssigen, Reduktionsmittels (z. B. Ammoniak oder wässrige Harnstofflösung) auf. Aus diesem Tank 6 kann mittels der Pumpe 2, die über entsprechende Förderleitungen mit dem Tank 6 in Fluidverbindung steht, Reduktionsmittel entnommen werden und (ebenfalls über entsprechende Förderleitungen) zu einer Dosiereinrichtung 3 in Form eines Dosierventils gefördert werden. Mit anderen Worten kann die Pumpe 2 eingangsseitig mit dem Tank 6 und ausgangsseitig mit der Dosiereinrichtung 3 in Fluidverbindung stehen.

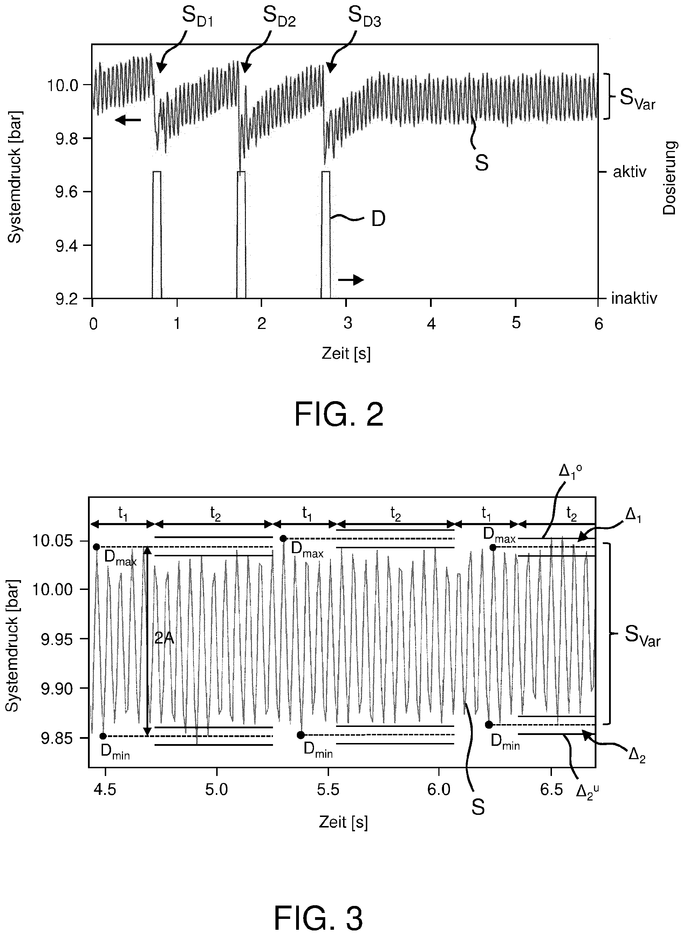

Mittels der Dosiereinrichtung 3 kann das Reduktionsmittel sodann in den im Abgastrakt 5 geführten Abgasstrom eingeleitet bzw. eingesprüht werden. Dabei ist zur Regulierung der Dosierparameter (Menge, Sprühstrahlform etc.) neben der Ausgestaltung der Dosiereinrichtung 3 selbst vor allem auch der an der Dosiereinrichtung 3 anliegende Reduktionsmittedruck entscheidend. Eine Regulierung dieses Reduktionsmitteldruckes auf einen vorbestimmten SollDruck pₛₒₗₗ kann dabei z. B. über eine entsprechende Steuerung bzw. Regelung der Pumpendrehzahl erfolgen. Hierzu kann das System zur Abgasnachbehandlung eine Steuereinrichtung 11 umfassen, die vorzugsweise zusammen mit der Vorrichtung 10 zur Amplitudenbestimmung als eine bauliche Einheit ausgeführt ist. Dieser Steuereinrichtung 11 kann ein Drucksignal S (vgl. Figur 2) bereitgestellt werden, wobei das Drucksignal S ein aktueller Fluiddruck des Reduktionsmittels sei kann und/oder eine Größe sein kann, aus der der aktuelle Fluiddruck des Reduktionsmittels ableitbar ist.

Zum Bereitstellen des entsprechenden Drucksignals S umfasst das in Figur 1 dargestellte System zur Abgasnachbehandlung eine ausgangsseitig der Pumpe 2 angeordnete Sensoreinrichtung 4, die ausgebildet ist, das entsprechende Drucksignal S zu erfassen und bereitzustellen. Auf Grundlage dieses Drucksignals S sowie mittels - an sich im Stand der Technik bekannter - Regelungsverfahren kann die Steuereinrichtung 11 sodann zur Ausgabe entsprechende Steuersignale an die Pumpe 2 ausgebildet sein, um dadurch die Pumpendrehzahl und damit den ausgangsseitigen Reduktionsmitteldruck zu regulieren. Zusätzlich kann eine Regulierung des Reduktionsmitteldruckes auch über eine optionale - vorliegend dargestellte - Rückleitung zum Tank 6 mit einer dort angeordneten Drossel 7 erfolgen.

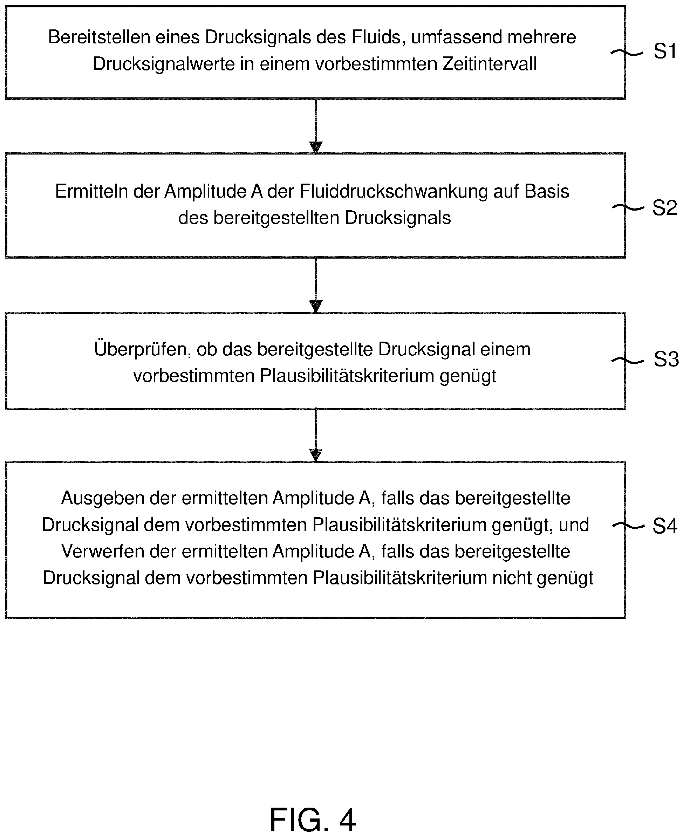

Neben der Steuerung der Pumpendrehzahl zur Regulierung des Reduktionsmitteldruckes wird das von der Sensoreinrichtung 4 erfasste und bereitgestellte Drucksignal S (vgl. Figur 2) ferner auch zur Ermittlung und Plausibilisierung der Amplitude Ader pumpeninduzierten Fluiddruckschwankung S_{Var} des Reduktionsmittels verwendet. Hierzu weist das System zur Abgasnachbehandlung eine entsprechende Vorrichtung 10 zur Bestimmung einer Amplitude A einer pumpeninduzierten Fluiddruckschwankung S_{Var} eines Fluids 1, das mittels einer Pumpe 2 auf einen Soll-Fluiddruck pₛₒₗₗ geregelt wird, gemäß einer Ausführungsform der Erfindung auf. Diese Vorrichtung 10, welche beispielsweise als Teil eines Steuergeräts des Kraftfahrzeugs 20 ausgebildet sein kann, ist dabei ausgelegt, ein nachfolgend - unter Bezugnahme auf Figur 4 - noch genauer beschriebenes Verfahren durchzuführen. Die Vorrichtung 10 kann hierbei z. B. einen programmtechnisch eingerichteten Mikroprozessor sowie einen entsprechenden Speicher umfassen. Vorzugsweise enthält der Speicher dabei Anweisungen, die durch den Prozessor ausführbar sind, wodurch die Vorrichtung 10 insgesamt in der Lage ist, das erfindungsgemäße Verfahren durchzuführen.

Figur 2 zeigt exemplarische Messwerte eines Drucksignals S eines Fluids 1 als Funktion der Zeit, das zur Bestimmung der Amplitude A einer pumpeninduzierten Fluiddruckschwankung S_{Var} des Fluids 1 genutzt werden kann. Beispielsweise kann das gezeigte Drucksignal dabei mittels der in Figur 1 dargestellten Sensoreinrichtung 4 erfasst und bereitgestellt worden sein. Hierbei zeigt Figur 2 den zeitlichen Verlauf des pumpenausgangsseitigen Fluiddrucks eines Fluids 1 während drei kurzer Dosiervorgänge (vgl. logisches Dosierungssignal D), wobei der Fluiddruck mittels einer Variation der Pumpendrehzahl auf einen Soll-Fluiddruck pₛₒₗₗ von nahezu 10 bar geregelt ist. Neben den kurzzeitigen Druckeinbrüche S_{D1}, S_{D2}, S_{D3} von etwa 0.2 bar während die Dosierung aktiv ist, ist in Figur 2 ebenfalls die durch die periodische Pumpenbewegung verursachte dynamische Veränderung (= pumpeninduzierte Fluiddruckschwankung S_{Var}) des Fluiddrucks um pₛₒₗₗ zu erkennen. Die zuverlässige Ermittlung der Amplitude A, d. h. der Größe, dieser pumpeninduzierten Fluiddruckschwankung S_{Var} ist dabei Gegenstand des zunächst unter Bezugnahme auf Figur 4 allgemein beschrieben Verfahrens.

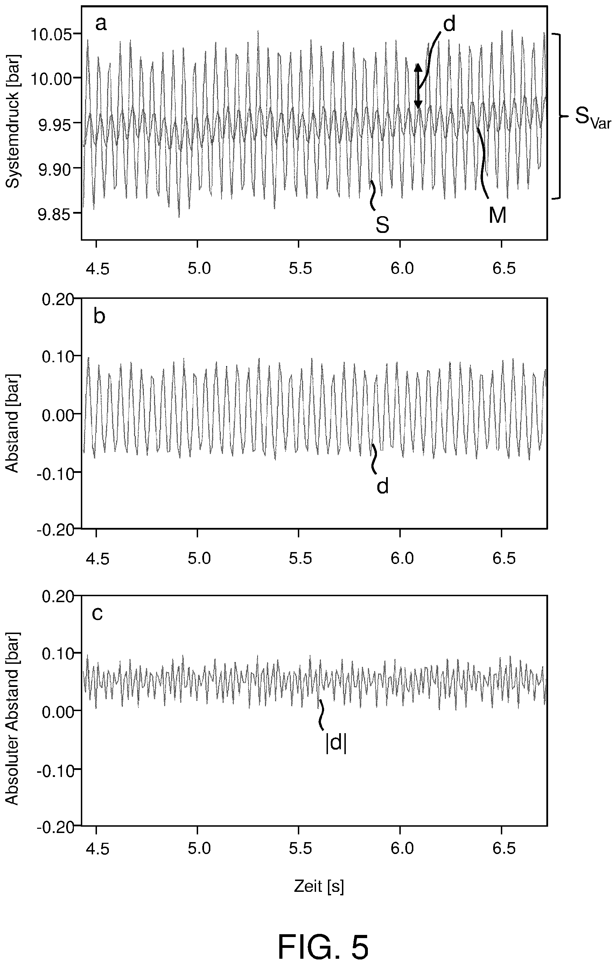

Figur 4 zeigt ein Flussdiagramm zur Illustration eines Verfahrens zur Bestimmung einer Amplitude A einer pumpeninduzierten Fluiddruckschwankung S_{Var} eines Fluids 1, das mittels einer Pumpe 2 auf einen Soll-Fluiddruck pₛₒₗₗ geregelt wird, gemäß einer Ausführungsform der Erfindung. Bei dem Fluid 1 kann es sich beispielsweise um ein Reduktionsmittel zur Abgasnachbehandlung, wie z. B. Ammoniak oder wässrige Harnstofflösung, handeln. Im Schritt S1 erfolgt ein Bereitstellen eines Drucksignals S des Fluids, umfassend mehrere Drucksignalwerte in einem vorbestimmten Zeitintervall. Dabei kann das Drucksignal S einen Fluiddruck des Fluids 1 angeben und/oder eine Größe sein, aus der der Fluiddruck des Fluids 1 ableitbar ist. Beispielsweise kann es sich bei dem bereitgestellten Drucksignal S in einem vorbestimmten Zeitintervall um den in Figur 2 gezeigten Verlauf handeln. Im Schritt S2 erfolgt ein Ermitteln der Amplitude Ader Fluiddruckschwankung S_{Var} auf Basis des bereitgestellten Drucksignals S. Dies kann dabei z. B. auf Basis einer Differenz zwischen einem maximalen Drucksignalwerts Dₘₐₓ und einem minimalen Drucksignalwert Dₘᵢₙ des bereitgestellten Drucksignals S erfolgen, wobei auf mögliche Rechenvorschriften zur Amplitudenermittlung detailliert im Zusammenhang mit der Beschreibung der Figuren 3 und 5 eingegangen werden wird. Im Schritt S3 erfolgt anschließend ein Überprüfen, ob das bereitgestellte Drucksignal S einem vorbestimmten Plausibilitätskriterium genügt. Entsprechend kann dieser Schritt auch als ein Validieren und/oder ein Plausibilisieren bezeichnet werden, um dadurch offensichtliche Unrichtigkeiten bei der Amplitudenermittlung im Schritt S2 zu erkennen. Beispielsweise kann das vorbestimmte Plausibilitätskriterium dabei die Bedingung umfassen, ob das Drucksignal S gerade nicht während eines - den Druckverlauf stark verfälschenden - Dosiervorgangs erfasst wurde. Anschließend erfolgt im Schritt S4 ein Ausgeben der ermittelten Amplitude A, falls das bereitgestellte Drucksignal S dem Plausibilitätskriterium genügt. Genügt das bereitgestellte Drucksignal S jedoch dem Plausibilitätskriterium nicht, erfolgt im Schritt S4 hingegen ein Verwerfen der ermittelten Amplitude A.

Im Zusammenhang mit den vorstehend erwähnten Verfahrensschritten des Ermittelns (S2) und Überprüfens (S3) zeigt Figur 3 eine schematische Darstellung, welche diese Verfahrensschritte gemäß einer ersten Ausführungsform der Erfindung veranschaulicht. Hierbei erfolgt zunächst innerhalb eines ersten Zeitabschnitts t₁ (t, ≈ 0.3 s) ein Bestimmen eines maximalen und minimalen Drucksignalwerts Dₘₐₓ und Dₘᵢₙ des bereitgestellten Drucksignals S. Mit anderen Worten wird innerhalb des ersten Zeitabschnitts t₁ des Drucksignals S der größte und kleineste Drucksignalwert bestimmt. Auf Basis dieser Werte kann dann ein Berechnen der Amplitude A beispielsweise über A=|Dₘₐₓ₋Dₘᵢₙ|/2 erfolgen. Alternativ können jedoch auch andere Rechenvorschriften, wie z. B. das geometrische Mittel von Dₘₐₓ und Dₘᵢₙ, verwendet werden.

Anschließend erfolgt innerhalb eines zum ersten Zeitabschnitt t₁ nachfolgenden (hier unmittelbar anschließenden) zweiten Zeitabschnitts t₂ (t₂ ≈ 0.5 s) ein Ermitteln einer ersten Anzahl N₁ von Drucksignalwerten, die innerhalb eines ersten Druckbands Δ₁ (Δ₁ ≈ 20mbar) um den maximalen Drucksignalwert Dₘₐₓ liegen sowie ein Ermitteln einer zweiten Anzahl N₂ von Drucksignalwerten, die innerhalb eines zweiten Druckbands Δ₂ (Δ₂ ≈ 20mbar) um den minimalen Drucksignalwert Dₘᵢₙ liegen. In diesem Zusammenhang kann das erste und zweite Druckbands Δ₁, Δ₂ somit auch als erster bzw. zweiter Toleranzbereich bezeichnet werden. Falls die hierbei ermittelte erste Anzahl N₁ einen ersten Schwellenwert S₁ (z. B. S₁=3) und die ermittelte zweite Anzahl N₂ einen zweiten Schwellenwert S₂ (z. B. S₁=3) überschreitet (Plausibilitätskriterium) soll das Ausgeben (S5) der vorstehend ermittelten Amplitude A erfolgen. Hierzu umfasst das Verfahren den Schritt des Überprüfens, ob das bereitgestellte Drucksignal S dem vorbestimmten Plausibilitätskriterium genügt. Mit anderen Worten kann dadurch eine Kontrolle bzw. Validierung erfolgen, ob der zuvor ermittelte Amplituden(schätz)wert tatsächlich einen repräsentativen Wert für den aktuellen Systemzustand darstellt, sodass dadurch insgesamt die Zuverlässigkeit des Verfahrens erhöht wird.

Um diese noch weiter zu erhöhen, kann das vorgenannte Überprüfen ferner auch ein Ermitteln umfassen, ob innerhalb des zweiten Zeitabschnitts t₂ zumindest ein Drucksignalwert über dem vorbestimmten ersten Druckband Δ₁ um den maximalen Drucksignalwert Dₘₐₓ und/oder ob zumindest ein Drucksignalwert unter dem vorbestimmten zweiten Druckband Δ₂ um den minimalen Drucksignalwert Dₘᵢₙ liegt. D. h. mit anderen Worten umfasst das Plausibilitätskriterium zusätzlich auch die Bedingung, dass innerhalb des zweiten Zeitabschnitts t₂ kein Drucksignalwert mit einem Wert größer als der obere Druckbandgrenzwert Δ₁° des vorbestimmten ersten Druckbands Δ₁ und/oder kleiner als der untere Druckbandgrenzwert Δ₂^{u} des vorbestimmten zweiten Druckbands Δ₂ vorliegt. Falls doch, soll die ermittelte Amplitude A nicht ausgegeben und stattdessen verworfen werden. Zusätzlich kann das Plausibilitätskriterium auch noch weitere Bedingungen umfassen, beispielsweise kann überprüft werden, dass das Drucksignal S keine Druckeinbrüche oder sonstige die Amplitudenermittlung verfälschende Artefakte umfasst. Insgesamt kann durch das vorgenannte Plausibilisieren auf vorteilhafte Weise die Zuverlässigkeit bei der Amplitudenbestimmung erhöht werden, wobei die Amplitudenbestimmung wiederum die Grundlage für eine weitere Diagnose des Fluidsystems bilden kann. So können aus der ermittelten bzw. ausgegebenen Amplitude A Informationen über die Steifigkeit des Systems und damit Informationen über das eventuelle Vorhandensein von Leckagen oder sonstigen Störungen im System gewonnen werden.

Figur 5 zeigt eine schematische Darstellung, welche die Verfahrensschritte des Ermittelns (S2) und Überprüfens (S3) gemäß einer zweiten Ausführungsform der Erfindung veranschaulicht. Hierzu ist im Diagramm a von Figur 5 derselbe Drucksignalbereich, wie vorstehend im Zusammenhang mit Figur 3 diskutiert, gezeigt. Anstelle der Unterteilung in die Zeitabschnitte t₁ und t₂ bildet hierbei der gleitende Drucksignalmittelwert M die Basis für die Amplitudenbestimmung. Der gleitende Drucksignalmittelwert M stellt hierbei den Durchschnitt aus mehreren - vorliegend der letzten 10 - einem "jeweiligen Drucksignalwert" vorausgehender, d. h. zeitlich zurückliegender, Drucksignalwerte dar. Dabei verschiebt sich die der gleitende Drucksignalmittelwert M mit dem jeweils betrachteten "jeweiligen Drucksignalwert" mit bzw. wandert mit diesem mit, sodass immer dieselbe Anzahl an Drucksignalwerten (hier 10) in die Berechnung des jeweiligen Werts des gleitenden Drucksignalmittelwerts M eingehen.

Das Ermitteln der Amplitude A erfolgt vorliegenden dann auf Basis der mittleren absoluten Abweichung der Drucksignalwerte des Drucksignals S zum gleitenden Drucksignalmittelwert M. Dazu wird zunächst die Abweichung bzw. der Abstand d (verdeutlicht durch den Doppelpfeil) eines jeden Drucksignalwerts des Drucksignals S zu einem zum jeweiligen Drucksignalwert zugehörigen Wert des gleitenden Drucksignalmittelwerts M ermittelt, wobei das Ergebnis dieser Rechenoperation beispielhaft im Diagramm b von Figur 5 dargestellt ist. Anschließend wird der Absolutbetrag |d| der jeweiligen Werte des Abstands d gebildet, was im Diagramm c dargestellt ist. Basierend darauf wird dann das arithmetische Mittel einer Mehrzahl (vorliegend z. B. 100) dieser Absolutbeträge |d| gebildet, was im vorliegenden Fall das jeweilige Summieren der letzten 100 absoluten Absolutbeträge |d| und das anschließende Teilen durch die Anzahl der Summanden (hier 100) umfasst. Alternativ kann die Mehrzahl jedoch auch eine andere Anzahl von Werte z. B. 50 oder 200 umfassen. Die Umrechnung in einen Amplitudenwert erfolgt abschließend durch eine Multiplikation mit dem Faktor π/2.

Analog zum gleitenden Drucksignalmittelwert M kann dabei auch die Berechnung der mittleren absoluten Abweichung der Drucksignalwerte in einer gleitenden bzw. wandernden Weise erfolgen. D. h. es kann an mehreren, vorzugsweise aufeinanderfolgenden, Stellen des Drucksignals S jeweils eine mittlere absolute Abweichungen berechnet werden, wobei immer dieselbe Anzahl an zeitlich zurückliegender absoluter Abweichungen in die Berechnung des jeweiligen Werts der gleitenden mittleren absoluten Abweichung eingehen. Mit anderen Worten kann eine quasi-kontinuierliche Berechnung der mittleren absoluten Abweichung und damit eine quasi-kontinuierliche Ermittlung der Amplitude A erfolgen, wobei in diesem Zusammenhang anstelle die vorstehend erwähnte Summation auch als Integration verstanden werden kann.

Das Plausibilisieren bzw. das Überprüfen, ob das bereitgestellte Drucksignal S einem vorbestimmten Plausibilitätskriterium genügt, kann gemäß dieser Ausführungsform auf Basis des Abstands d (Diagramm b) erfolgen. Dazu kann der Schritt des Überprüfens (S3) ein Ermitteln einer Summe einer Mehrzahl von, vorzugsweise aufeinanderfolgenden, Werten des Abstands d umfassen. Mit anderen Worten kann das Überprüfen ein Ermitteln einer Summe von vorzeichenbehafteter Abweichungen der Mehrzahl von Drucksignalwerten des Drucksignals S zum gleitenden Drucksignalmittelwert M umfassen. Hierbei soll das Ausgeben der Amplitude A bevorzugt nur dann erfolgen, falls die Summe von vorzeichenbehafteten Abweichungen gleich 0 oder kleiner als ein vorbestimmter Schwellenwert (z. B. 5 mbar) ist. D. h. das bereitgestellte Drucksignal S soll dem vorbestimmten Plausibilitätskriterium genügen, falls die Summe von vorzeichenbehafteten Abweichungen gleich 0 oder kleiner als ein vorbestimmter Schwellenwert ist. Dieser Überprüfungsschritt stellt dabei auf vorteilhafte Weise sicher, dass der ausgegebene Amplitudenwert der Fluiddruckschwankung S_{Var} die Abweichung zu einen quasi-stationären Mittelwert angibt bzw. das ein quasi-stationären Zustand vorliegt.

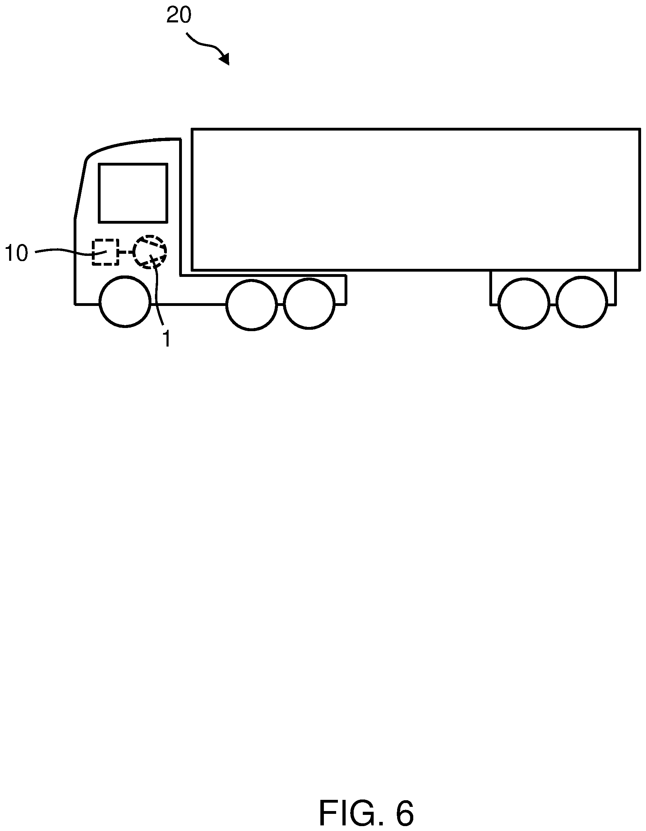

Figur 6 zeigt eine schematische Darstellung eines Kraftfahrzeugs 20 mit einer Vorrichtung 10 zur Bestimmung einer Amplitude A einer pumpeninduzierten Fluiddruckschwankung S_{Var} eines Fluids 1, das mittels einer Pumpe 2 auf einen Soll-Fluiddruck pₛₒₗₗ geregelt wird, gemäß einer Ausführungsform der Erfindung. Bei dem Kraftfahrzeug 20 handelt es sich vorliegend um ein Sattelkraftfahrzeug, d. h. ein Gespann aus einer Sattelzugmaschine und einem Sattelanhänger. Das Kraftfahrzeug 20 umfasst dabei unter anderem eine Pumpe 2, wobei mittels der Pumpe 2 vorzugsweise ein Fluiddruck eines Fluids 2, vorzugsweise ein Fluiddruck eines Reduktionsmittels zur Abgasnachbehandlung, auf einen Soll-Fluiddruck pₛₒₗₗ geregelt wird. Beispielsweise kann die Regelung des Fluiddrucks dabei über eine Variation der Pumpendrehzahl erfolgen. Daneben umfasst das Kraftfahrzeug 20 eine Vorrichtung 10 zur Bestimmung der pumpeninduzierten Fluiddruckschwankung S_{Var} des Fluids 1, vorzugsweise zur Bestimmung der pumpeninduzierten Schwankung des Reduktionsmitteldrucks. Die Vorrichtung 10 ist dabei ausgelegt, ein Verfahren, wie in diesem Dokument beschrieben, durchzuführen. Hierzu kann die Vorrichtung 10 ferner auch eine Sensoreinrichtung 4 umfassen, die ausgebildet ist, das entsprechende Drucksignal zu erfassen und bereitzustellen. Beispielsweise kann die Vorrichtung 10 hierzu einen Drucksensor 4 umfassen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Fluid
- 2: Pumpe
- 3: Dosiereinrichtung
- 4: Sensoreinrichtung
- 5: Abgastrakt
- 6: Tank
- 7: Drossel
- 10: Vorrichtung zur Drehzahlbestimmung
- 11: Steuereinrichtung
- 20: Kraftfahrzeug
- S_{D1},S_{D2},S_{D3}: Druckeinbrüche
- D: Dosierungssignal
- d: Abstand
- Idl: Absolutbetrag des Abstands
- M: Gleitender Drucksignalmittelwert
- S: Drucksignals
- S_{Var}: Pumpeninduzierte Fluiddruckvariation
- Δ₁°: Obere Druckbandgrenzwert
- Δ₂^{u}: Unterer Druckbandgrenzwert

## Patentansprüche

1. Verfahren zur Bestimmung einer Amplitude A einer pumpeninduzierten, vorzugsweise periodischen, Fluiddruckschwankung eines Fluids (1), das mittels einer Pumpe (2) auf einen Soll-Fluiddruck pₛₒₗₗ geregelt wird, umfassend die Schritte:
- Bereitstellen eines Drucksignals des Fluids (1), umfassend mehrere Drucksignalwerte in einem vorbestimmten Zeitintervall;
- Ermitteln der Amplitude A der pumpeninduzierten Fluiddruckschwankung auf Basis des bereitgestellten Drucksignals;
- Überprüfen, ob das bereitgestellte Drucksignal einem vorbestimmten Plausibilitätskriterium genügt, wobei das Plausibilitätskriterium vorzugsweise einen quasi-stationären Zustand charakterisiert; und
- Ausgeben der ermittelten Amplitude A, falls das bereitgestellte Drucksignal dem vorbestimmten Plausibilitätskriterium genügt, und Verwerfen der ermittelten Amplitude A, falls das bereitgestellte Drucksignal dem vorbestimmten Plausibilitätskriterium nicht genügt.

2. Verfahren nach Anspruch 1, **dadurch gekennzeichnet, dass**
a) das Fluid ein Reduktionsmittel zur Abgasnachbehandlung ist; und/oder
b) die pumpeninduzierte Fluiddruckschwankung eine durch den Betrieb der Pumpe verursachte periodische und/oder sinusförmige Fluiddruckoszillation ist; und/oder
c) das Verfahren ein Bestimmen einer Systemsteifigkeit auf Basis der ermittelten und/oder ausgegebenen Amplitude A umfasst.

3. Verfahren nach Anspruch 1 oder 2, **dadurch gekennzeichnet, dass** das Ermitteln der Amplitude A die Schritte umfasst:
- Bestimmen eines maximalen und minimalen Drucksignalwerts Dₘₐₓ und Dₘᵢₙ des bereitgestellten Drucksignals innerhalb eines ersten Zeitabschnitts t₁ des vorbestimmten Zeitintervalls; und
- Berechnen der Amplitude A auf Basis des bestimmten maximalen und minimalen Drucksignalwerts Dₘₐₓ und Dₘᵢₙ.

4. Verfahren nach Anspruch 3, **dadurch gekennzeichnet, dass** das Überprüfen folgende Schritte umfasst:
- Ermitteln einer ersten Anzahl N₁ von Drucksignalwerten, die innerhalb eines zum ersten Zeitabschnitt t₁ nachfolgenden zweiten Zeitabschnitts t₂ in einem vorbestimmten ersten Druckband Δ₁ um den maximalen Drucksignalwert Dₘₐₓ liegen; und/oder
- Ermitteln einer zweiten Anzahl N₂ von Drucksignalwerten, die innerhalb des zweiten Zeitabschnitts t₂ in einem vorbestimmten zweiten Druckband Δ₂ um den minimalen Drucksignalwert Dₘᵢₙ liegen; und
dass das bereitgestellte Drucksignal dem vorbestimmten Plausibilitätskriterium genügt, falls die erste Anzahl N₁ einen ersten Schwellenwert S₁ und/oder die zweite Anzahl N₂ einen zweiten Schwellenwert S₂ überschreitet.

5. Verfahren nach Anspruch 4, **dadurch gekennzeichnet, dass** das Überprüfen folgende Schritte umfasst:
a1) Ermitteln, ob innerhalb des zweiten Zeitabschnitts t₂ zumindest ein Drucksignalwert über dem vorbestimmten ersten Druckband Δ₁ um den maximalen Drucksignalwert Dₘₐₓ liegt; und/oder
a2) Ermitteln, ob innerhalb des zweiten Zeitabschnitts t₂ zumindest ein Drucksignalwert unter dem vorbestimmten zweiten Druckband Δ₂ um den minimalen Drucksignalwert Dₘᵢₙ liegt; und
b) dass das bereitgestellte Drucksignal dem vorbestimmten Plausibilitätskriterium genügt, falls kein Drucksignalwert über dem vorbestimmten ersten Druckband Δ₁ um den maximalen Drucksignalwert Dₘₐₓ liegt und/oder kein Drucksignalwert unter dem vorbestimmten zweiten Druckband Δ₂ um den minimalen Drucksignalwert Dₘᵢₙ.

6. Verfahren nach Anspruch 4 oder 5, **dadurch gekennzeichnet, dass**
a) das vorbestimmte erste Druckband Δ₁ um den maximalen Drucksignalwert Dₘₐₓ und das vorbestimmte zweite Druckband Δ₂ um den minimalen Drucksignalwert Dₘᵢₙ zentriert ist; und/oder
b) das vorbestimmte erste und/oder zweite Druckband Δ₁ und/oder Δ₂ eine Breite aufweist, die auf Basis des ermittelten maximalen und/oder minimalen Drucksignalwerts Dₘₐₓ und/oder Dₘᵢₙ festgelegt ist, vorzugsweise eine Breite, die im Wesentlichen als 0.2% des maximalen oder minimalen Drucksignalwerts Dₘₐₓ oder Dₘᵢₙ festgelegt ist; und/oder
c) das vorbestimmte erste Druckband Δ₁ dieselbe Breite wie das vorbestimmte zweite Druckband Δ₂ aufweist.

7. Verfahren nach einem der Ansprüche 3 bis 6, **dadurch gekennzeichnet, dass**
a) der erste Zeitabschnitt t₁ kürzer als der zweite Zeitabschnitt t₂ ist; und/oder
b) der erste Zeitabschnitt t₁ und/oder der zweite Zeitabschnitt t₂ länger als 0.1 s, vorzugsweise länger als 0.3 s, besonders bevorzugt länger als 0.5 s ist.

8. Verfahren nach einem der vorherigen Ansprüche, **dadurch gekennzeichnet, dass** das Ermitteln der Amplitude A folgenden Schritt umfasst:
- Berechnen der Amplitude A auf Basis einer, vorzugsweise gleitenden, mittleren absoluten Abweichung einer Mehrzahl von Drucksignalwerten des bereitgestellten Drucksignals zu einem gleitenden Drucksignalmittelwert.

9. Verfahren nach Anspruch 8, **dadurch gekennzeichnet, dass** das Überprüfen folgenden Schritt umfasst:
- Ermitteln einer Summe von vorzeichenbehafteten Abweichungen der Mehrzahl von, vorzugsweise aufeinanderfolgenden, Drucksignalwerten des Drucksignals zum gleitenden Drucksignalmittelwert; und
dass das bereitgestellte Drucksignal dem vorbestimmten Plausibilitätskriterium genügt, falls die Summe von vorzeichenbehafteten Abweichungen gleich 0 oder kleiner als ein vorbestimmter Schwellenwert ist.

10. Verfahren nach Anspruch 8 oder 9, **dadurch gekennzeichnet, dass** das Berechnen der Amplitude A folgende Schritte umfasst:
- Berechnen eines zugehörigen Werts des gleitenden Drucksignalmittelwerts zu jeden Drucksignalwert der Mehrzahl von Drucksignalwerten auf Basis mehrerer dem jeweiligen Drucksignalwert, vorzugsweise unmittelbar, vorausgehender Drucksignalwerte; und
- Berechnen einer betragsmäßigen Abweichung eines jeden Drucksignalwerts der Mehrzahl von Drucksignalwerten zum zugehörigen Wert des gleitenden Drucksignalmittelwerts.

11. Verfahren nach einem der Ansprüche 8 bis 10, **dadurch gekennzeichnet, dass**
a) die Mehrzahl von Drucksignalwerten zumindest 10, vorzugsweise 50, besonders bevorzugt 100, aufeinanderfolgende Drucksignalwerte umfasst; und/oder
b) der gleitende Drucksignalmittelwert auf einer zuvor festgelegten Anzahl von Drucksignalwerten und/oder auf Drucksignalwerten in einem zuvor festgelegten Zeitintervall basiert.

12. Verfahren nach einem der vorherigen Ansprüche, **gekennzeichnet durch** einen getakteten Betrieb, in dem das Verfahren in regelmäßigen Zeitabständen ausgeführt wird, wobei vorzugsweise
a) die regelmäßigen Zeitabstände dem vorbestimmten Zeitintervall entsprechen; und/oder
b) eine Ausgabe der ermittelten Amplitude A der Fluiddruckschwankung nach Ablauf der regelmäßigen Zeitabstände erfolgt.

13. Verfahren nach einem der vorherigen Ansprüche, **dadurch gekennzeichnet, dass** das auf einen Soll-Fluiddruck pₛₒₗₗ geregelte Fluid (1) mittels einer Dosiereinrichtung (3) dosierbar ist und das bereitgestellte Drucksignal ein Drucksignal während einer Betriebsphase der Dosiereinrichtung (3) ist, in der keine Dosierung erfolgt.

14. Vorrichtung (10) zur Bestimmung einer Amplitude A einer pumpeninduzierten Fluiddruckschwankung eines Fluids (1), wobei die Vorrichtung ausgelegt ist, ein Verfahren nach einem der vorherigen Ansprüche durchzuführen und vorzugsweise eine Sensoreinrichtung (3) umfasst, die ausgebildet ist, das Drucksignal zu erfassen und bereitzustellen.

15. Kraftfahrzeug (20), umfassend eine Vorrichtung (10) zur Bestimmung einer Amplitude A einer pumpeninduzierten Fluiddruckschwankung eines Fluids (1) gemäß Anspruch 14 14.

## Claims

1. Method for determining an amplitude A of a pump-induced, preferably periodic, fluid pressure fluctuation of a fluid (1) which is controlled to a target fluid pressure pₛₒₗₗ by a pump (2), comprising the steps:
- providing a pressure signal of the fluid (1), comprising several pressure signal values in a predetermined time interval;
- determining the amplitude A of the pump-induced fluid pressure fluctuation based on the provided pressure signal;
- checking whether the provided pressure signal satisfies a predetermined plausibility criterion, wherein the plausibility criterion preferably characterizes a quasi-stationary state; and
- outputting the determined amplitude A, if the provided pressure signal satisfies the predetermined plausibility criterion, and discarding the determined amplitude A, if the provided pressure signal does not satisfy the predetermined plausibility criterion.

2. Method according to claim 1, **characterized in that**
a) the fluid is a reducing agent for exhaust gas after-treatment; and/or
b) the pump-induced fluid pressure fluctuation is a periodic and/or sinusoidal fluid pressure oscillation caused by the operation of the pump; and/or
c) the method comprises determining a system stiffness based on the determined and/or outputted amplitude A.

3. Method according to claim 1 or 2, **characterized in that** the determining of the amplitude A comprises the steps of:
- determining a maximum and minimum pressure signal value Dₘₐₓ and Dₘᵢₙ of the provided pressure signal within a first time period t₁ of the predetermined time interval; and
- calculating the amplitude A based on the determined maximum and minimum pressure signal values Dₘₐₓ and Dₘᵢₙ.

4. Method according to claim 3, **characterized in that** the checking comprises the following steps:
- determining a first number N₁ of pressure signal values, which lie in a predetermined first pressure band Δ₁ around the maximum pressure signal value Dₘₐₓ, within a second time period t₂ following the first time period t₁; and/or
- determining a second number N₂ of pressure signal values, which lie in a predetermined second pressure band Δ₂ around the minimum pressure signal value Dₘᵢₙ within the second time period t₂; and
**in that** the provided pressure signal satisfies the predetermined plausibility criterion, if the first number N₁ exceeds a first threshold value S₁ and/or the second number N₂ exceeds a second threshold value S₂.

5. Method according to claim 4, **characterized in that** the checking comprises the following steps:
a1) determining whether within the second time period t₂ at least one pressure signal value is above the predetermined first pressure band Δ₁ around the maximum pressure signal value Dₘₐₓ; and/or
a2) determining whether within the second time period t₂ at least one pressure signal value lies below the predetermined second pressure band Δ₂ around the minimum pressure signal value Dₘᵢₙ; and
b) that the provided pressure signal satisfies the predetermined plausibility criterion, if no pressure signal value lies above the predetermined first pressure band Δ₁ around the maximum pressure signal value Dₘₐₓ and/or no pressure signal value lies below the predetermined second pressure band Δ₂ around the minimum pressure signal value Dₘᵢₙ.

6. Method according to claim 4 or 5, **characterized in that**
a) the predetermined first pressure band Δ₁ is centred around the maximum pressure signal value Dₘₐₓ and the predetermined second pressure band Δ₂ is centred around the minimum pressure signal value Dₘᵢₙ; and/or
b) the predetermined first and/or second pressure band Δ₁ and/or Δ₂ has a width, which is determined based on the determined maximum and/or minimum pressure signal value Dₘₐₓ and/or Dₘᵢₙ, preferably a width, which is determined substantially as 0.2% of the maximum or minimum pressure signal value Dₘₐₓ or Dₘᵢₙ; and/or
c) the predetermined first pressure band Δ₁ has the same width as the predetermined second pressure band Δ₂.

7. Method according to any one of claims 3 to 6, **characterized in that**
a) the first time period t₁ is shorter than the second time period t₂; and/or
b) the first time period t₁ and/or the second time period t₂ is longer than 0.1 s, preferably longer than 0.3 s, particular preferred longer than 0.5 s.

8. Method according to any one of the preceding claims, **characterized in that** the determining of the amplitude A comprises the following step:
- calculating the amplitude A based on a, preferably sliding, mean absolute deviation of a plurality of pressure signal values of the provided pressure signal from a sliding pressure signal mean value.

9. Method according to claim 8, **characterized in that** the checking comprises the following step:
- determining a sum of signed deviations of the plurality of, preferably consecutive, pressure signal values of the pressure signal from the same pressure signal mean value; and
that the provided pressure signal satisfies the predetermined plausibility criterion, if the sum of signed deviations is equal to 0 or smaller than a predetermined threshold value.

10. Method according to claim 8 or 9, **characterized in that** the calculating of the amplitude A comprises the following steps:
- calculating an associated value of the sliding pressure signal mean value to each pressure signal value of the plurality of pressure signal values based on a plurality of pressure signal values preceding, preferably immediately preceding, the respective pressure signal value; and
- calculating an amount of deviation of each pressure signal value of the plurality of pressure signal values from the corresponding value of the sliding pressure signal mean value.

11. Method according to any one of claims 8 to 10, **characterized in that**
a) the plurality of pressure signal values comprises at least 10, preferably 50, particular preferred 100, consecutive pressure signal values; and/or
b) the sliding pressure signal mean value is based on a predetermined number of pressure signal values and/or on pressure signal values in a predetermined time interval.

12. Method according to any one of the preceding claims, **characterized by** a clocked operation in which the method is carried out at regular time intervals, wherein preferably
a) the regular time intervals correspond to the predetermined time interval; and/or
b) an output of the determined amplitude A of the fluid pressure fluctuation occurs after the regular time intervals have elapsed.

13. Method according to one of the previous claims, **characterized in that** the fluid (1) controlled to a target fluid pressure pₛₒₗₗ is dosable by a dosing device (3) and the provided pressure signal is a pressure signal during an operating phase of the dosing device (3) in which no dosing takes place.

14. Device (10) for determining an amplitude A of a pump-induced fluid pressure fluctuation of a fluid (1), wherein the device is designed to perform a method according to one of the previous claims and preferably comprises a sensor device (3), which is configured to detect and provide the pressure signal.

15. Motor vehicle (20) comprising a device (10) for determining an amplitude A of a pump-induced fluid pressure fluctuation of a fluid (1) according to claim 14.

## Revendications

1. Procédé de détermination d'une amplitude A d'une fluctuation de pression de fluide induite par une pompe, de préférence périodique, d'un fluide (1) qui est régulé au moyen d'une pompe (2) à une pression de fluide de consigne pₛₒₗₗ, comprenant les étapes suivantes :
- fourniture d'un signal de pression du fluide (1), comprenant plusieurs valeurs de signal de pression dans un intervalle de temps prédéterminé ;
- identification de l'amplitude A de la fluctuation de pression de fluide induite par la pompe sur la base du signal de pression fourni ;
- vérification si le signal de pression fourni satisfait à un critère de plausibilité prédéterminé, le critère de plausibilité caractérisant de préférence un état quasi-stationnaire ; et
- délivrance en sortie de l'amplitude A identifiée dans le cas où le signal de pression fourni satisfait au critère de plausibilité prédéterminé, et rejet de l'amplitude A identifiée dans le cas où le signal de pression fourni ne satisfait pas au critère de plausibilité prédéterminé.

2. Procédé selon la revendication 1, **caractérisé en ce que**
a) le fluide est un agent réducteur destiné au post-traitement des gaz d'échappement ; et/ou
b) la fluctuation de pression de fluide induite par la pompe est une oscillation de pression de fluide périodique et/ou sinusoïdale provoquée par le fonctionnement de la pompe ; et/ou
c) le procédé comprend une détermination d'une rigidité du système sur la base de l'amplitude A identifiée et/ou délivrée en sortie.

3. Procédé selon la revendication 1 ou 2, **caractérisé en ce que** l'identification de l'amplitude A comprend les étapes suivantes :
- détermination d'une valeur de signal de pression maximale et minimale Dₘₐₓ et Dₘᵢₙ du signal de pression fourni à l'intérieur d'une première portion de temps t₁ de l'intervalle de temps prédéterminé ; et
- calcul de l'amplitude A sur la base de la valeur de signal de pression maximale et minimale Dₘₐₓ et Dₘᵢₙ déterminée.

4. Procédé selon la revendication 3, **caractérisé en ce que** la vérification comprend les étapes suivantes :
- identification d'un premier nombre N₁ de valeurs de signal de pression qui se trouvent à l'intérieur d'une deuxième portion de temps t₂ qui suit la première portion de temps t₁ dans une première bande de pression Δ₁ prédéterminée autour de la valeur de signal de pression maximale Dₘₐₓ ; et/ou
- identification d'un deuxième nombre N₂ de valeurs de signal de pression qui se trouvent à l'intérieur de la deuxième portion de temps t₂ dans une deuxième bande de pression Δ₂ prédéterminée autour de la valeur de signal de pression minimale Dₘᵢₙ ; et
**en ce que** le signal de pression fourni satisfait au critère de plausibilité prédéterminé dans le cas où le premier nombre N₁ dépasse une première valeur de seuil S₁ et/ou le deuxième nombre N₂ dépasse une deuxième valeur de seuil S₂.

5. Procédé selon la revendication 4, **caractérisé en ce que** la vérification comprend les étapes suivantes :
a1) identification si, au sein de la deuxième portion de temps t₂, au moins une valeur de signal de pression se trouve au-dessus de la première bande de pression Δ₁ prédéterminée autour de la valeur de signal de pression maximale Dₘₐₓ ; et/ou
a2) identification si, au sein de la deuxième portion de temps t₂, au moins une valeur de signal de pression se trouve au-dessous de la deuxième bande de pression Δ₂ prédéterminée autour de la valeur de signal de pression minimale Dₘᵢₙ ; et
b) **en ce que** le signal de pression fourni satisfait au critère de plausibilité prédéterminé dans le cas où aucune valeur de signal de pression ne se trouve au-dessus de la première bande de pression Δ₁ prédéterminée autour de la valeur de signal de pression maximale Dₘₐₓ et/ou aucune valeur de signal de pression ne se trouve au-dessous de la deuxième bande de pression Δ₂ prédéterminée autour de la valeur de signal de pression minimale Dₘᵢₙ .

6. Procédé selon la revendication 4 ou 5, **caractérisé en ce que**
a) la première bande de pression Δ₁ prédéterminée est centrée autour de la valeur de signal de pression maximale Dₘₐₓ et/ou la deuxième bande de pression Δ₂ prédéterminée autour de la valeur de signal de pression minimale Dₘᵢₙ ; et/ou
b) la première et/ou la deuxième bande de pression prédéterminée Δ₁ et/ou Δ₂ présente une largeur qui est spécifiée sur la base de la valeur de signal de pression maximale et/ou minimale Dₘₐₓ et/ou Dₘᵢₙ identifiée, de préférence une largeur qui est spécifiée sensiblement égale à 0,2 % de la valeur de signal de pression maximale ou minimale Dₘₐₓ ou Dₘᵢₙ ; et/ou
c) la première bande de pression Δ₁ prédéterminée présente la même largeur que la deuxième bande de pression Δ₂ prédéterminée.

7. Procédé selon l'une des revendications 3 à 6, **caractérisé en ce que**
a) la première portion de temps t₁ est plus courte que la deuxième portion de temps t₂ ; et/ou
b) la première portion de temps t₁ et/ou la deuxième portion de temps t₂ est plus longue que 0,1 s, de préférence plus longue que 0,3 s, notamment de préférence plus longue que 0,5 s.

8. Procédé selon l'une des revendications précédentes, **caractérisé en ce que** l'identification de l'amplitude A comprend les étapes suivantes :
- calcul de l'amplitude A sur la base d'un écart absolu moyen, de préférence glissant, entre une pluralité de valeurs de signal de pression du signal de pression fourni par rapport à une valeur moyenne de signal de pression glissante.

9. Procédé selon la revendication 4, **caractérisé en ce que** la vérification comprend l'étape suivante :
- identification d'une somme d'écarts signés de la pluralité de valeurs de signal de pression, de préférence successives, du signal de pression par rapport à la valeur moyenne de signal de pression glissante ; et
**en ce que** le signal de pression fourni satisfait au critère de plausibilité prédéterminé dans le cas où la somme des écarts signés est égale à 0 ou inférieure à une valeur de seuil prédéterminée.

10. Procédé selon la revendication 8 ou 9, **caractérisé en ce que** le calcul de l'amplitude A comprend les étapes suivantes :
- calcul d'une valeur associée de la valeur moyenne de signal de pression glissante pour chaque valeur de signal de pression de la pluralité de valeurs de signal de pression sur la base de plusieurs valeurs de signal de pression qui précèdent, de préférence directement, la valeur de signal de pression respective ; et
- calcul du montant d'un écart de chaque valeur de signal de pression de la pluralité de valeurs de signal de pression par rapport à la valeur associée de la valeur moyenne de signal de pression glissante.

11. Procédé selon l'une des revendications 8 à 10, **caractérisé en ce que**
a) la pluralité de valeurs de signal de pression comprend au moins 10, de préférence 50, notamment de préférence 100, valeurs de signal de pression successives ; et/ou
b) la valeur moyenne de signal de pression glissante se base sur un nombre spécifié précédemment de valeurs de signal de pression et/ou de valeurs de signal de pression dans un intervalle de temps spécifié précédemment.

12. Procédé selon l'une des revendications précédentes, **caractérisé par** un fonctionnement cadencé dans lequel le procédé est mis en œuvre à des laps de temps réguliers,
a) les laps de temps réguliers correspondant de préférence à l'intervalle de temps prédéterminé ; et/ou
b) une délivrance en sortie de l'amplitude A identifiée de la fluctuation de pression de fluide s'effectuant après écoulement des laps de temps réguliers.

13. Procédé selon l'une des revendications précédentes, **caractérisé en ce que** le fluide (1) régulé à une pression de fluide de consigne pₛₒₗₗ peut être dosé au moyen d'un dispositif de dosage (3) et le signal de pression fourni est un signal de pression pendant une phase de fonctionnement du dispositif de dosage (3) dans laquelle aucun dosage n'a lieu.

14. Arrangement (10) de détermination d'une amplitude A d'une fluctuation de pression de fluide induite par une pompe d'un fluide (1), l'arrangement étant conçu pour mettre en œuvre un procédé selon l'une des revendications précédentes et comportant de préférence un dispositif capteur (3) qui est configuré pour acquérir et fournir le signal de pression.

15. Véhicule automobile (20), comportant un arrangement (10) de détermination d'une amplitude A d'une fluctuation de pression de fluide induite par une pompe d'un fluide (1) selon la revendication 14.
